# FASCICULE DE BREVET EUROPEEN

(11) **EP 0 392 589 B1**
(45) Date de publication et mention de la délivrance du brevet: **26.10.1994**
(21) Numéro de dépôt: 90200787.1
(22) Date de dépôt: 02.04.1990
(51) Int. Cl.: A62D 3/00, F23G 5/02, B01D 9/00, B01F 17/00

(54) **Procédé pour le traitement de résidus lourds de chloration**
Verfahren zur Aufbereitung schwerer Chlorierungsrückstände
Process for the treatment of heavy chlorination residues

(30) Priorité: 14.04.1989 FR 8905094
(43) Date de publication de la demande: 17.10.1990
(73) Titulaire: SOLVAY (Société Anonyme), B-1050 Bruxelles (BE)
(72) Inventeur: Conrard, Claude, F-39500 Tavaux (FR); Menetrier, Lucien, F-39100 Dole (FR)
(74) Mandataire: Nichels, William

(56) Documents cités:
- US-A- 4 540 837
- CHEMICAL PATENTS INDEX, BASIC ABSTRACTS JOURNAL, semaine 8748, 3 février 1988,section C, résumé no. 87-337210/48, Derwent Publications Ltd, Londres, GB;& JP-A-08 4763

## Description

La présente invention concerne un procédé pour le traitement de résidus lourds issus de la fabrication de produits chlorés dans lequel on ajoute aux résidus lourds un composé chimique choisi parmi certains composés gras afin de former des suspensions liquides fluides et stables.

Les procédés de chloration et plus particulièrement les procédés de chloration des hydrocarbures en C₁ à C₄; réalisés souvent à haute température, génèrent la formation de sous-produits résiduaires lourds contenant des hydrocarbures chlorés tels que l'hexachloréthane, l'hexachlorobutadiène et l'hexachlorobenzène.

De tels résidus lourds posent différents problèmes d'ordre technique et d'ordre écologique tels que :
- la nécessité de récupérer et de séparer les produits organiques valorisables encore noyés dans les résidus,
- l'élimination de façon acceptable écologiquement des produits non valorisables industriellement.

Ces différents problèmes, résolus de façon plus ou moins fragmentaire dans les installations industrielles existantes, nécessitent une surveillance continue d'un point de vue industriel afin d'augmenter les rendements de la récupération des produits valorisables d'une part et d'autre part d'un point de vue écologique afin de rendre les rejets dans le milieu environnant inoffensifs et conformes aux exigences écologiques de plus en plus critiques.

Une solution, proposée récemment dans le brevet Us-A-4 540 837, consiste à dissoudre les résidus lourds de la chloration à des températures comprises entre 100° et 180°C dans des hydrocarbures goudronneux obtenus comme sous-produits de la pyrolyse du 1,2-dichloréthane et/ou dans des hydrocarbures ayant une teneur peu élevée en produits aromatiques de point d'ébullition compris entre 160° et 300°C et finalement à incinérer les solutions ainsi obtenues.

Ce procédé, qui permet, par l'étape d'incinération, de supprimer le besoin actuel du stockage souterrain de produits tels que l'hexachlorobenzène, présente toutefois encore un certain nombre d'inconvénients. Ainsi il nécessite, pour un bon fonctionnement, de très fortes dilutions, sinon il n'empêche pas la décantation de certains produits, tels que l'hexachlorobenzène, qualifiés ci-avant comme non valorisables. Par ailleurs, lorsqu'il est effectué dans des conditions idéales i.e. avec des solutions parfaites, il nécessite des quantités de diluant telles qu'il devient finalement nécessaire de brûler jusqu'à dix fois la quantité des résidus mis en oeuvre. Or il est clair qu'une telle opération engendre la perte de produits encore éventuellement valorisables et, bien qu'elle soit couplée à une récupération de l'acide chlorhydrique, provoque la mise à l'atmosphère d'un excès d'autres gaz non souhaités dans un rapport direct avec les quantités de matières incinérées.

On a maintenant trouvé un procédé de traitement des résidus de chloration qui ne possède plus les inconvénients du procédé précité dans lequel on met en solution les résidus dans un excès de diluant et qui rend l'élimination des résidus par incinération utilisable en pratique. Ce procédé permet d'incinérer les résidus de la chloration sans qu'il soit nécessaire de recourir à des excès intolérables de matières à incinérer et sans perte inutile de matières premières.

La présente invention concerne à cet effet un procédé de traitement de résidus lourds résultant de la fabrication d'hydrocarbures chlorés selon lequel on ajoute aux résidus lourds un ou plusieurs composés chimiques choisis parmi les acides gras, les alcools gras ou les esters gras.

Par résidus lourds résultant de la fabrication d'hydrocarbures chlorés on entend tout résidu d'hydrocarbure chloré contenant des impuretés lourdes telles que l'hexachlorobenzène, présentant en-dessous de 100 à 120°C un phénomène de décantation dû à la formation de cristaux de ces impuretés lourdes.

Habituellement le procédé de l'invention est réalisé avec des résidus lourds d'hydrocarbures chlorés dont au moins 5% en poids de la composition totale est constituée d'hexachlorobenzène. Généralement on opère sur des résidus dont au moins 10% en poids de la composition totale est constituée d'hexachlorobenzène.

De préférence les résidus lourds traités contiennent d'autres produits résiduaires, tels que l'hexachlorobutadiène et/ou l'hexachloréthane; dans ce cas on opère habituellement avec des résidus lourds d'hydrocarbures chlorés dont au moins 20% et de préférence 30% en poids de la composition totale sont constitués d'hexachlorobenzène et d'hexachlorobutadiène. Les bons résultats observés avec le procédé de l'invention sont illustrés à l'exemple 1 avec une composition de résidus lourds d'hydrocarbures chlorés contenant 50% en poids de perchloréthylène, 25% en poids d'hexachlorobutadiène et 25% en poids d'hexachlorobenzène.

Enfin, le procédé de l'invention se montre particulièrement intéressant lorsqu'il est réalisé sur des compositions contenant au moins 50% et de préférence au moins 90 à 95% voire 100% en poids de composés perchlorés tels que l'hexachloréthane, l'hexachlorobutadiène et l'hexachlorobenzène. De bons résultats observés avec de telles compositions sont illutrés à l'exemple 3 avec une composition de résidus lourds d'hydrocarbures chlorés contenant 50% en poids d'hexachlorobutadiène et 50% en poids d'hexachlorobenzène.

Les résidus lourds d'hydrocarbures chlorés mis en oeuvre dans le procédé de l'invention sont habituellement issus de la chloration d'hydrocarbures contenant de 1 à 4 atomes de carbone et de préférence contenant de 1 à 3 atomes de carbone; les hydrocarbures de départ peuvent être de nature aliphatique ou oléfinique et éventuellement déjà être substitués par des atomes d'halogène tels que le chlore. De préférence on met en oeuvre des résidus lourds issus de la fabrication du tétrachlorométhane, du perchloréthylène, du trichloréthylène ou de la pyrolyse chlorée ou non de composés contenant jusqu'à 3 atomes de carbone.

Les composés chimiques mis en oeuvre dans le procédé de l'invention sont choisis parmi les acides gras, les alcools gras et les esters gras, habituellement parmi les composés chimiques de ces familles contenant au moins 12 à 25 atomes de carbone. De préférence on opère avec des acides gras, tels que des acides hydroxylés comportant ou non des chaînes hydrocarbonées latérales, des alcools gras et des esters gras dits saturés ou insaturés contenant de 16 à 25 atomes de carbone ou un mélange de ceux-ci et tout particulièrement préférés sont l'acide stéarique technique, les acides hydroxylés et les esters de lanoline; les meilleurs résultats ont été obtenus avec l'acide stéarique technique.

Outre des composés chimiques purs on peut mettre en oeuvre des mélanges de composés gras tels que définis ci-avant. Une forme avantageuse utilisable dans le contexte de la présente invention consiste bien entendu à mettre les composés gras en oeuvre sous forme de qualité dite "technique".

Les composés chimiques choisis parmi les acides, alcools et esters gras sont généralement utilisés dans la présente invention à raison de 2 à 60% en poids de la composition totale mise en oeuvre. Habituellement on met en oeuvre de 5 à 50% poids de ces composés chimiques par rapport à la composition totale. De bons résultats ont été observés avec 10% à 50% en poids d'acide stéarique dans des compositions constituées d'un mélange 50/50 d'hexachlorobutadiène et d'hexachlorobenzène.

Le procédé selon la présente invention permet la mise en suspension des impuretés lourdes, telles que l'hexachlorobenzène, présentes dans les résidus lourds issus de la fabrication d'hydrocarbures chlorés et de provoquer ainsi une fluidification des résidus lourds. Cette fluidification sous forme de suspension permet une circulation aisée d'une suspension homogène à température relativement basse et le pompage aisé de la suspension en vue de l'amener au moment voulu à l'incinérateur.

La mise en suspension des résidus lourds additionnés des composés chimiques selon le procédé de l'invention peut se faire par tout moyen connu et se fait habituellement à l'aide de moyens mécaniques tels que l'agitation. Selon la composition particulière des résidus lourds à traiter l'agitation peut être plus ou moins violente.

Lorsque la composition de résidus lourds d'hydrocarbures chlorés est constituée quasi uniquement de produits lourds non valorisables comme l'hexachloréthane, l'hexachlorobutadiène et l'hexachlorobenzène, on doit recourir pour la mise en suspension à des moyens mécaniques permettant des agitations violentes telles qu'obtenues par un concassage violent dans des appareils du type agitateur-broyeur. Ainsi, dans le cas d'un résidu lourd contenant 50% en poids d'hexachlorobutadiène et 50% d'hexachlorobenzène, on doit pour la mise en suspension recourir à un malaxage de 3 minutes dans un agitateur-broyeur dont l'hélice tourne au moins à 10000 et de préférence à 15000 tours/minute. Dans ce cas précis, le concassage s'avère être une opération importante pour l'obtention de suspensions stables à basse température.

La température à laquelle le composé chimique choisi parmi les acides, alcools et esters gras est ajouté aux résidus lourds constitués uniquement de produits non valorisables, tels que l'hexachlorobutadiène et l'hexachlorobenzène, s'avère également être un paramètre important pour l'obtention de bonnes suspensions fluides et stables. On réalise cette addition à des températures situées entre 60 et 200°C. Les températures préférées pour cette addition se situent entre 65 et 150°C. Enfin de bons résultats sont généralement obtenus lorsque l'addition est réalisée aux alentours de 80°C.

La pression à laquelle est réalisé le procédé est généralement comprise entre 1 et 50 bars. De bons résultats ont été obtenus à la pression atmosphérique.

L'addition de composés chimiques dans le procédé selon l'invention peut être réalisée à tout moment avant, pendant ou après concassage mécanique des résidus lourds mais, pour des raisons pratiques, se fait généralement juste avant l'opération mécanique de mise en suspension.

Bien que la demanderesse ne tient pas à être liée ou limitée dans ces revendications par une quelconque explication théorique du phénomène de mise en suspension et de maintien en suspension stable des résidus lourds par le procédé de l'invention, il lui semble toutefois utile de fournir les explications suivantes s'appliquant à des résidus constitués uniquement de résidus lourds non valorisables tels que définis ci-avant.

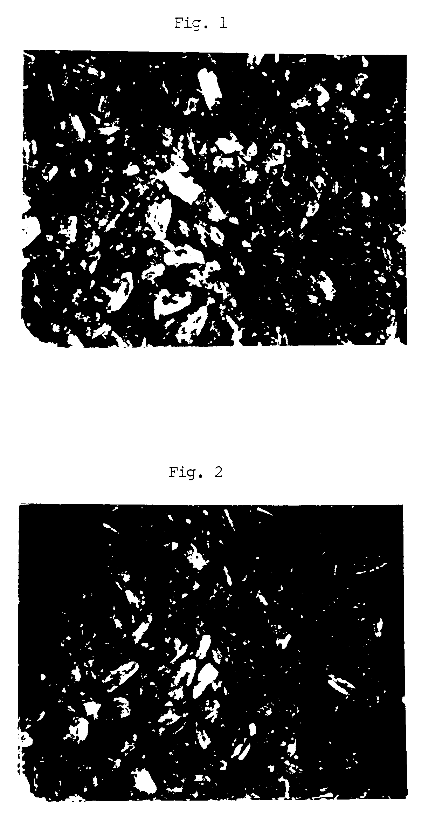

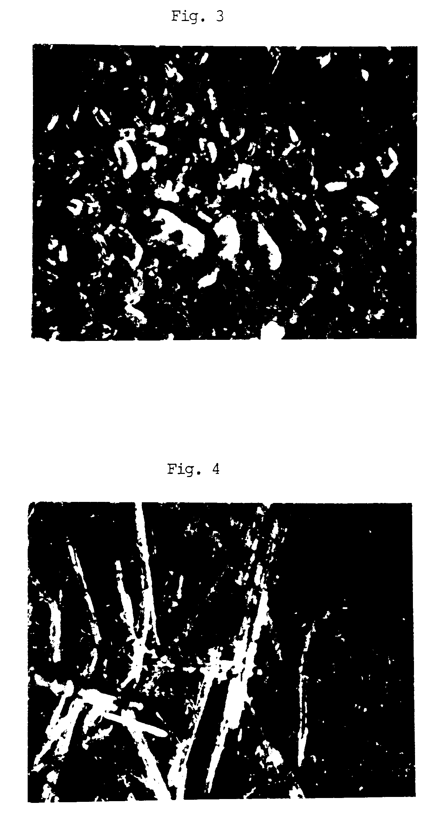

En effet, des mesures au microscope permettent de distinguer pour un résidu lourd constitué d'hexachlorobutadiène et d'hexachlorobenzène dans un rapport 50/50 que : d'une part les dimensions des cristaux présents dans le milieu sont pratiquement identiques pour un résidu :
- après concassage dans un agitateur-broyeur pendant 3 minutes à 80°C et
- après réchauffage ultérieur à 150°C puis refroidissement à 80°C lorsque après concassage l'on ajoute 20% d'acide stéarique au résidu lourd de départ (fig.1 et 2), et d'autre part les dimensions des cristaux présents dans le milieu sont fort différentes pour le résidu :
- après concassage dans un agitateur-broyeur pendant 3 minutes à 80°C et
- après réchauffage ultérieur à 150°C puis refroidissement à 80°C lorqu'aucun composé chimique n'est ajouté au résidu lourd de départ (fig.3 et 4). Dès lors, l'effet des composés chimiques additionnés semble être un effet de stabilisation de la dimension cristalline, c.à.d un effet inhibant de la croissance et de l'agglomération des cristaux et par voie de conséquence une stabilisation des suspensions, qui restent dès lors fluides lorsqu'elles sont maintenues au-delà de 50°C, et ceci probablement dû à un enrobage des petits cristaux présents dans les résidus lourds par les composés chimiques particuliers ajoutés.

Les suspensions obtenues selon le procédé de l'invention restent stables et fluides jusqu'à des températures aussi basses que 50°C. En outre, elles peuvent après solidification être remises en suspension par simple réchauffage sans que soient affectées leur stabilité et fluidité. En outre, les suspensions gardent leurs propriétés également après avoir été soumises à des températures élevées de l'ordre de 250 à 300°C (comme par exemple dans un préchauffeur d'incinérateur). Il résulte de ce qui précède que les suspensions obtenues par le procédé de l'invention se présentent sous une forme idéale en vue d'une incinération avec stockage intermédiaire des produits à incinérer. En effet, le stockage et la circulation de ces produits peuvent être effectués à des températures relativement basses sans risques de décantation et de prise en masse dans l'appareillage en opération normale. En outre si pour une raison quelconque le chauffage de l'installation ne peut être assuré de manière continue, la remise en suspension peut être assurée par simple réchauffage de l'installation sans autre opération de purge etc.

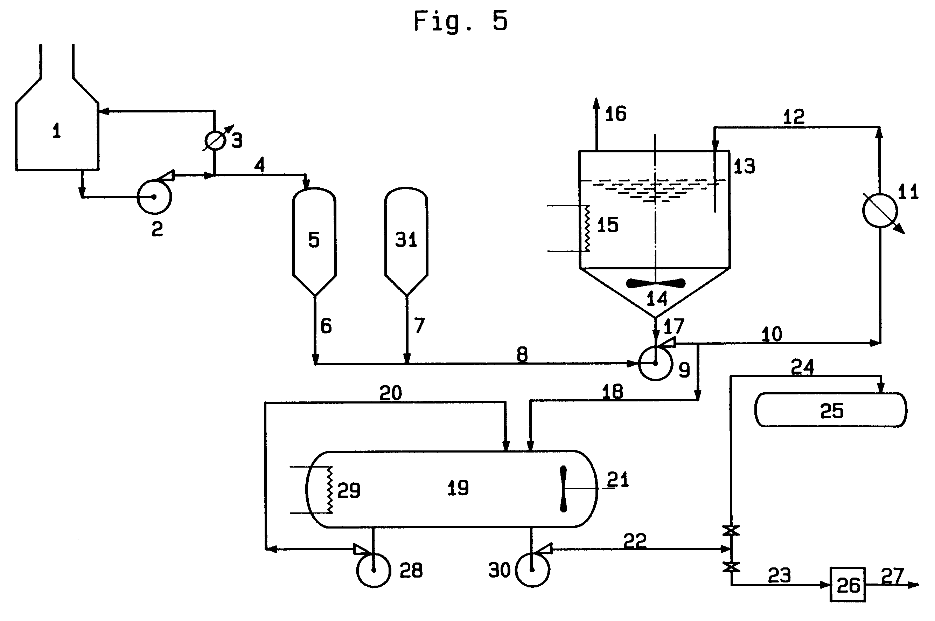

Le procédé selon l'invention peut être réalisé dans toute installation permettant de réunir les conditions opératoires décrites ci-avant. Un shéma général d'une installation est représenté à la figure 5. Cette installation comprend une colonne de séparation ou de distillation des produits légers et des produits lourds 1, une pompe 2, un échangeur de température 3 permettant de chauffer le produit de départ. Le produit lourd chaud issu de la colonne 1 est amené par une conduite 4 à un réservoir tampon 5. Le produit lourd est soutiré de ce réservoir tampon 5 par une conduite 6 dans laquelle on amène par le conduit 7 le ou les composés chimiques nécessaires à l'invention qui sont stockés dans la cuve 31. De là une conduite 8 transfert le produit lourd vers une pompe broyeuse 9 et par la conduite 10 dans un échangeur de chaleur 11. Le produit est ensuite envoyé par la conduite 12 dans un réservoir 13 muni d'un agitateur 14 et d'un système de chauffage 15. De ce réservoir 13 équipé d'une conduite 16 de dégazéification, le produit lourd est soit recyclé par la conduite 17 vers la pompe broyeuse 9 soit transféré dans un réservoir tampon 19 par la conduite 18. Le réservoir tampon 19 est équipé d'un agitateur 21 et d'un système de chauffage 29. Le produit lourd est alors soit recyclé via la pompe 28 par la conduite 20 dans le réservoir 19, soit transféré via la pompe 30 par la conduite 22. Le produit est transféré par la conduite 22 soit par la conduite 24 vers une citerne 25 pour être stocké, soit par la conduite 23 vers un incinérateur 26, les produits brûlés sont transférés par la conduite 27.

L'invention est illustrée par les exemples qui suivent.

### Exemple 1R

On met en oeuvre 1kg d'un mélange provenant de la fabrication du trichloréthylène et contenant 250g d'hexachlorobenzène, 250g d'hexachlorobutadiène et 500g de perchloréthylène à 200°C à la pression atmosphérique.

On refroidit ce mélange à 80°C et on procède à un broyage durant 3 minutes dans un mixer ayant une hélice à 3 pales de 50 mm de diamètre qui tourne à 15000 t/mn.

On obtient une solution très fluide contenant de fins cristaux qui décantent.

### Exemple 2

On amène 1kg d'un mélange identique à celui de l'exemple 1R à la température ambiante à la pression atmosphérique.

On ajoute à ce mélange 200g d'acide stéarique de qualité technique.

On porte à ébullition à 200°C, une solution est obtenue.

On refroidit à 80°C et on procède à un broyage durant 3 minutes dans un mixer ayant une hélice à 3 pales de 50 mm de diamètre qui tourne à 15000 t/min.

On obtient une suspension, qui ne décante plus, de viscosité cinématique 1,6 degrés Engler mesurée à 80°C (environ 6.10⁻⁶m².s⁻¹, référence norme Afnor NFT 60100).

### Exemples 3, 4 et 5

On met en oeuvre 1 kg d'une composition de résidus lourds d'hydrocarbures chlorés contenant 50 % en poids d'hexachlorobutadiène et 50 % en poids d'hexachlorobenzène.

On ajoute à cette composition 200 g d'acide stéarique à 80°C pour l'exemple 3, à 150°C pour l'exemple 4, à 220°C pour l'exemple 5.

On refroidit à 80°C sous agitation lente et on procède à un broyage durant 3 minutes dans un mixer semblable à celui décrit à l'exemple 2.

On obtient des suspensions pompables qui ne décantent pas. Les viscosités cinématiques obtenues mesurées à 80°C sont rassemblées dans le tableau 1.

**Tableau 1**

| EXEMPLES | VISCOSITE CINEMATIQUE | |
|---|---|---|
| | DEGRES ENGLER | 10⁻⁶m².s⁻¹ |
| 3 | 1,6 | 6 |
| 4 | 1,6 | 6 |
| 5 | 1,9 | 9,5 |

### Exemples 6 et 7

On met en oeuvre 1 kg d'une composition de résidus lourds d'hydrocarbures chlorés contenant 50 % en poids d'hexachlorobutadiène et 50 % en poids d'hexachlorobenzène.

Pour l'exemple 6, on ajoute 100 g de fuel lourd n° 2 à 220°C à pression atmosphérique. Puis, on refroidit à 80°C et on ajoute 100 g d'acide stéarique à cette température.

On procède alors à un broyage durant 3 minutes dans un mixer ayant une hélice à 3 pales de 50 mm de diamètre qui tourne à 15000 t/mn.

Pour l'exemple 7, on ajoute à l'inverse l'acide stéarique à 220°C et le fuel lourd n° 2 à 80°C.

On obtient des suspensions qui ne décantent pas. Les viscosités cinématiques obtenues (mesurées à 80°C) sont rassemblées dans le tableau 2.

**Tableau 2**

| EXEMPLES | VISCOSITE CINEMATIQUE | |
|---|---|---|
| | DEGRES ENGLER | 10⁻⁶m².s⁻¹ |
| 6 | 4,8 | 35 |
| 7 | 1,8 | 8,5 |

## Revendications

1. Procédé d'obtention d'une suspension fluide et stable, au départ de résidus lourds issus de la fabrication d'hydrocarbures chlorés contenant des impuretés lourdes présentant en-dessous de 100 à 120 °C un phénomène de décantation, caractérisé en ce qu'on ajoute aux résidus lourds, à une température située entre 60 et 200 °C, un ou plusieurs composés chimiques choisis parmi les acides gras, les alcools gras et les esters gras et en ce qu'on soumet les résidus lourds additionnés du ou des composés chimiques à une opération de mise en suspension.

2. Procédé selon la revendication 1, caractérisé en ce que le composé chimique est choisi parmi les acides gras, les alcools gras et les esters gras contenant au moins 12 atomes de carbone.

3. Procédé selon la revendication 1, caractérisé en ce que le composé chimique est choisi parmi les acides gras, les alcools gras et les esters gras contenant de 16 à 25 atomes de carbone.

4. Procédé selon la revendication 1, caractérisé en ce que le composé chimique est mis en oeuvre sous forme de qualité dite "technique".

5. Procédé selon la revendication 4, caractérisé en ce que le composé chimique est l'acide stéarique.

6. Procédé selon l'une quelconque des revendications 1 à 5, caractérisé en ce que le composé chimique est mis en oeuvre a raison de 2 à 60 % en poids de la composition totale.

7. Procédé selon l'une quelconque des revendications 1 à 6, caractérisé en ce que l'on ajoute le composé chimique à une température située entre 65 et 150 °C.

8. Procédé selon la revendication 1, caractérisé en ce que l'opération de mise en suspension consiste en une agitation mécanique.

9. Procédé selon la revendication 8, caractérisé en ce que l'opération de mise en suspension est réalisée au moyen d'un appareil de type agitateur-broyeur.

10. Procédé selon la revendication 9, caractérisé en ce que l'on opère avec des résidus lourds contenant de l'hexachlorobenzène et de l'hexachlorobutadiène.

## Claims

1. Process for obtaining a fluid and stable suspension by starting with heavy residues originating from the manufacture of chlorinated hydrocarbons containing heavy impurities exhibiting a sedimentation phenomenon below 100 to 120°C, characterized in that one or more chemical compounds chosen from fatty acids, fatty alcohols and fatty esters are added to the heavy residues at a temperature lying between 60 and 200°C and in that the heavy residues to which the chemical compound(s) has (have) been added are subjected to a suspending operation.

2. Process according to Claim 1, characterized in that the chemical compound is chosen from fatty acids, fatty alcohols and fatty esters containing at least 12 carbon atoms.

3. Process according to Claim 1, characterized in that the chemical compound is chosen from fatty acids, fatty alcohols and fatty esters containing from 16 to 25 carbon atoms.

4. Process according to Claim 1, characterized in that the chemical compound is used in the form of so-called "technical" grade.

5. Process according to Claim 4, characterized in that the chemical compound is stearic acid.

6. Process according to any one of Claims 1 to 5, characterized in that the chemical compound is used in a proportion of 2 to 60 % by weight of the total composition.

7. Process according to any one of Claims 1 to 6, characterized in that the chemical compound is added at a temperature lying between 65 and 150°C.

8. Process according to Claim 1, characterized in that the suspending operation consists of mechanical stirring.

9. Process according to Claim 8, characterized in that the suspending operation is carried out by means of an apparatus of mixer-mill type.

10. Process according to Claim 9, characterized in that the operation is carried out with heavy residues containing hexachlorobenzene and hexachlorobutadiene.

## Patentansprüche

1. Verfahren zum Erhalt einer flüssigen und stabilen Suspension, ausgehend von schweren, aus der Herstellung von chlorierten Kohlenwasserstoffen hervorgegangenen Rückständen, die schwere Verunreinigungen enthalten, welche unterhalb von 100 bis 120 °C ein Dekantierungs-Phänomen aufweisen, dadurch gekennzeichnet, daß man zu schweren Rückständen bei einer Temperatur zwischen 60 und 200 °C eine oder mehrere chemische Verbindungen, ausgewählt unter den Fettsäuren, den Fettalkoholen und den Fettsäureestern, hinzufügt und daß man die schweren Rückstände, denen von der oder den chemischen Verbindungen zugesetzt wurde, einem Suspendier-Verfahren unterwirft.

2. Verfahren gemäß Anspruch 1, dadurch gekennzeichnet, daß die chemische Verbindung unter den Fettsäuren, den Fettalkoholen und den Fettsäureestern ausgewählt ist, die wenigstens 12 Kohlenstoffatome enthalten.

3. Verfahren gemäß Anspruch 1, dadurch gekennzeichnet, daß die chemische Verbindung unter den Fettsäuren, den Fettalkoholen und den Fettsäureestern ausgewählt ist, die 16 bis 25 Kohlenstoffatome enthalten.

4. Verfahren gemäß Anspruch 1, dadurch gekennzeichnet, daß die chemische Verbindung in Form von sogenannter "technischer" Qualität verwendet wird.

5. Verfahren gemäß Anspruch 4, dadurch gekennzeichnet, daß die chemische Verbindung Stearinsäure ist.

6. Verfahren gemäß irgendeinem der Ansprüche 1 bis 5, dadurch gekennzeichnet, daß die chemische Verbindung in einer Menge von 2 bis 60 Gew.-% der Gesamtzusammensetzung verwendet wird.

7. Verfahren gemäß irgendeinem der Ansprüche 1 bis 6, dadurch gekennzeichnet, daß man die chemische Verbindung bei einer Temperatur zwischen 65 und 150 °C hinzufügt.

8. Verfahren gemäß Anspruch 1, dadurch gekennzeichnet, daß das Suspendier-Verfahren aus einem mechanischen Rühren besteht.

9. Verfahren gemäß Anspruch 8, dadurch gekennzeichnet, daß das Suspendier-Verfahren mittels eines Geräts vom Mahlrührer-Typ ausgeführt wird.

10. Verfahren gemäß Anspruch 9, dadurch gekennzeichnet, daß man mit schweren Rückständen arbeitet, die Hexachlorbenzol und Hexachlorbutadien enthalten.
